Europäisches Patentamt

European Patent Office

Office européen des brevets

(19)

(11) **EP 0 463 917 B1**

(12) **FASCICULE DE BREVET EUROPEEN**

(45) Date de publication et mention
de la délivrance du brevet:
**21.05.1997 Bulletin 1997/21**

(51) Int Cl.6: **H04M 19/08, H04M 1/31**

(21) Numéro de dépôt: **91401592.0**

(22) Date de dépôt: **14.06.1991**

(54) **Dispositif numérique d'initialisation conditionnelle**

Digitale Anordnung zur bedingten Initialisierung

Digital device for conditional initialization

(84) Etats contractants désignés:
**DE FR GB IT**

(30) Priorité: **26.06.1990 FR 9007985**

(43) Date de publication de la demande:
**02.01.1992 Bulletin 1992/01**

(73) Titulaire: **SGS-THOMSON MICROELECTRONICS S.A.**
**94250 Gentilly (FR)**

(72) Inventeur: **Tournier, Christian,**
**Cabinet Ballot Schmit**
**F-75116 Paris (FR)**

(74) Mandataire: **Schmit, Christian Norbert Marie et al**
**Cabinet Ballot-Schmit**
**7, rue Le Sueur**
**75116 Paris (FR)**

(56) Documents cités:
**EP-A- 0 266 837**   **GB-A- 2 082 355**
**US-A- 4 590 432**

- **MINI-MICRO CONFERENCE RECORD vol. 21, no. 3, Mai 1984, New York, US, pp 1-5; R. OTT: 'EIGHT-BIT CMOS MICROCOMPUTER UNIT IDEAL FOR INTELLIGENT TELEPHONE SYSTEMS'**

**Description**

L'invention a pour objet un dispositif d'initialisation conditionnelle d'un circuit télé-alimenté. En particulier, elle permet l'initialisation conditionnelle de la circuiterie d'un poste téléphonique ou d'un système d'alarme pour la surveillance de maisons particulières.

Les circuits télé-alimentés ne disposent pas d'alimentation locale : batterie, bloc d'alimentation. L'énergie qui leur est nécessaire leur est apportée par les lignes de transmission auxquelles ils sont connectés.

Dans le cas du téléphone, l'énergie est véhiculée par la ligne téléphonique. Suivant le type de téléphone, analogique ou numérique, l'énergie n'est pas toujours présente sur la ligne. En effet, dans le cas des téléphones analogiques, la numérotation se fait par modulation de fréquence, c'est à dire par modulation du courant sur la ligne téléphonique. L'énergie est toujours présente sur la ligne.

Dans le cas des téléphones numériques, la numérotation se fait par impulsions : chaque chiffre (0 à 9) est représenté par un nombre d'impulsions d'une certaine durée, ou d'un certain gabarit, sur la ligne téléphonique.

L'impulsion est obtenue en court-circuitant la ligne téléphonique toute la durée de l'impulsion correspondant au chiffre choisi et sélectionné sur le clavier du téléphone; ce qui revient à une coupure d'énergie à chaque impulsion. Ces coupures d'énergie sont calibrées puisqu'elles correspondent aux gabarits déterminés des impulsions de numérotation.

C'est dans ce dernier cas de numérotation par impulsions que l'invention trouve une application particulière. En effet, la circuiterie téléphonique doit accepter ces coupures d'énergie calibrées qui correspondent à la numérotation. Par contre, elle ne doit pas accepter les coupures d'énergie qui ne correspondent pas aux gabarits des impulsions de numérotation : mauvais fonctionnement, coupure de la ligne.... Elle doit alors être ré-initialisée. C'est pourquoi l'on parle d'initialisation conditionnelle : l'initialisation est conditionnelle à une coupure d'alimentation hors gabarit.

La circuiterie d'un tel poste téléphonique numérique se compose essentiellement de deux parties électroniques :

- d'une logique bipolaire pour gérer l'interface du poste avec la ligne téléphonique,
- d'un microprocesseur qui gère en particulier le clavier téléphonique et envoie des commandes à la logique bipolaire.

En outre, c'est la logique bipolaire qui assure la fonction de régulation en tension pour le microprocesseur et qui contrôle l'initialisation conditionnelle du microprocesseur (gestion de la broche RESET).

Lors de la numérotation, pour chaque impulsion de numérotation, la logique bipolaire court-circuite la ligne téléphonique selon un gabarit déterminé et met la sortie du régulateur de tension en état de haute impédance de manière à découpler le régulateur de tension du microprocesseur. Celui-ci est alors alimenté par la décharge d'une capacité relais.

Par contre, la broche RESET va subir des fluctuations liées à l'état de la ligne téléphonique. Comme il faut empêcher le reset du microprocesseur (et de la circuiterie téléphonique, en général) pendant la numérotation et par contre, l'activer pour des coupures d'énergie hors gabarits de numérotation, on utilise un ensemble de composants discrets, -capacités, diodes, réseaux de résistance et transistors-, capable de stabiliser l'état de la broche RESET pendant les coupures d'énergie calibrées (numérotation).

C'est un circuit de stabilisation encombrant, qui s'interpose entre la logique bipolaire et le microprocesseur. Un objet de l'invention est de supprimer ce circuit de stabilisation additionnel, de manière à s'affranchir des problèmes d'encombrement et de calibration des éléments discrets le constituant.

Un autre objet de l'invention est d'utiliser des éléments programmables en vue d'un dispositif d'initialisation conditionnelle souple et adaptable.

L'invention a donc pour objet un dispositif d'initialisation conditionnelle d'un circuit télé-alimenté par une ligne de transmission d'informations, cette ligne pouvant être court-circuitée pendant des durées calibrées, un court-circuit correspondant à une coupure d'alimentation du circuit télé-alimenté par la ligne de transmission, caractérisé en ce que des moyens comportant un compteur commandent l'initialisation du circuit télé-alimenté si la durée d d'une coupure d'alimentation est inférieure ou supérieure à une durée calibrée d0.

D'autres caractéristiques et avantages de l'invention sont décrits, à titre indicatif et non limitatif de l'invention, dans la description qui suit, faite en référence aux dessins annexés dans lesquels :

- la figure 1 est un schéma fonctionnel interne d'un dispositif d'initialisation conditionnelle selon un premier mode de réalisation de l'invention,
- la figure 2 est un diagramme des temps correspondant au fonctionnement du dispositif d'initialisation conditionnelle selon le premier mode de réalisation de l'invention,
- la figure 3 est un schéma fonctionnel interne d'un dispositif d'initialisation conditionnelle selon un second mode de réalisation de l'invention,
- la figure 4 montre un diagramme des temps correspondant au fonctionnement d'un dispositif d'initialisation conditionnelle selon un second mode de réalisation de l'invention,
- la figure 5 montre un exemple de gabarits d'impulsions que permet d'admettre un dispositif d'initialisation conditionnelle selon le second mode de réalisation de l'invention.

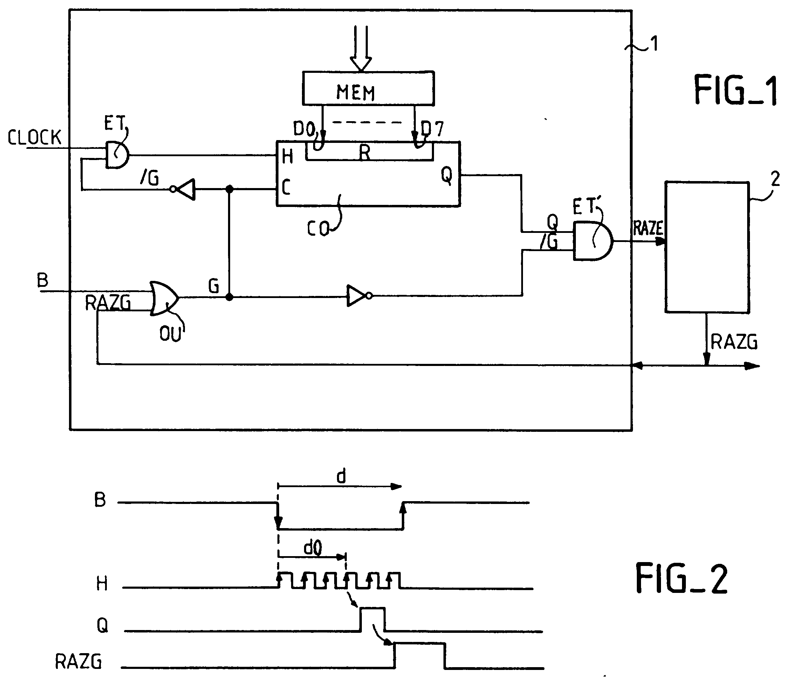

La figure 1 est un schéma fonctionnel interne d'un dispositif d'initialisation conditionnelle, selon un premier mode de réalisation de l'invention. Dans un tel dispositif, la condition d'initialisation est simple : si la durée d d'une impulsion présente sur la ligne à surveiller est inférieure ou supérieure, par exemple supérieure, à une durée d0 correspondant à un gabarit déterminé, alors il y a initialisation. Dans le cas du téléphone, la ligne à surveiller est la ligne téléphonique et l'unique gabarit (d0) pourrait correspondre à la durée des impulsions de numérotation.

Le dispositif 1 d'initialisation conditionnelle comporte une broche d'entrée B, à laquelle on connecte la ligne de télé-alimentation à surveiller (ligne téléphonique par exemple). Il comporte un compteur C0 muni d'un registre de chargement R, d'une entrée horloge H, d'une entrée d'initialisation C ("clear") et d'une sortie impulsionnelle Q. Un circuit 2 de gestion de l'initialisation du circuit commande l'initialisation générale RAZG de la circuiterie. Il reçoit en particulier comme entrée, la sortie RAZE du dispositif d'initialisation. Il peut recevoir d'autres entrées : par exemple, dans une application téléphonique, il reçoit une information COMB correspondant à "combiné décroché". La sortie RAZG est en particulier le signal d'initialisation du dispositif 1 d'initialisation conditionnelle.

Dans ce premier mode de réalisation, une porte OU OU a pour entrées le signal B à surveiller et le signal d'initialisation générale RAZG et pour sortie un signal G.

Ce signal G est connecté à l'entrée C ("clear") de remise à zéro du compteur C0. Son inverse, /G, est connecté à l'entrée d'une porte ET ET. L'autre entrée de cette porte ET est connectée à un signal horloge CLOCK. La sortie de la porte ET est l'entrée horloge H du compteur.

Le registre R de chargement du compteur est initialisé à la remise à zéro à une valeur n présentée par exemple sur des entrées DO-D7 du compteur. La valeur n peut-être présentée par un registre de mémorisation MEM. Elle pourrait l'être aussi par un microprocesseur.

La sortie Q du compteur et la sortie inversée /G de la porte OU déjà vue sont les entrées d'une porte ET ET'. La sortie de cette porte ET' est la sortie RAZE du dispositif 1 d'initialisation conditionnelle.

Par ailleurs, dans cet exemple de réalisation, les conventions de niveau actif pour les différents signaux sont les suivantes :

- le signal B est actif bas : dans le cas présent, un niveau bas sur B correspond à une coupure d'alimentation; le début de la coupure correspond alors à un front descendant et la fin, à un front montant;
- le signal RAZG est actif haut : un niveau haut du signal commande l'initialisation générale du circuit;
- le signal C est actif haut, c'est à dire qu'un niveau haut sur C commande la remise à zéro du compteur;
- sur réception d'un front montant sur l'entrée horloge H du compteur, le registre R est décrémenté d'une unité;

- le signal Q est actif haut et la sortie Q est impulsionnelle : quand le registre R passe à zéro, une impulsion "positive" apparaît sur la sortie Q.
- le signal RAZE suit la même convention que le signal Q.

Le fonctionnement d'un tel dispositif est alors le suivant :

L'initialisation générale du circuit, commandée par un passage au niveau haut de RAZG (RAZG = 1) provoque la remise à zéro du compteur. En particulier, le registre R de chargement est initialisé, sur le passage de RAZG au niveau haut (front montant), à une valeur n, présente sur les entrées D0-D7 du compteur. De plus, quand le signal RAZG vaut 1, le signal /G vaut zéro et empêche la transmission de l'horloge CLOCK sur l'entrée horloge H du compteur : le compteur est arrêté. On remarquera que le passage à 1 du signal B produit les mêmes effets.

Quand RAZG vaut O, si le signal B passe à zéro, c'est à dire par exemple, quand il y a coupure d'alimentation sur la ligne téléphonique, le signal /G passe à 1 et autorise donc la transmission de l'horloge CLOCK sur l'entrée horloge H. A chaque coup d'horloge, par exemple, sur chaque front montant de l'horloge H, le registre R est décrémenté d'une unité. Si le registre R contenait au départ une valeur n, au bout de n coups d'horloge, il contient la valeur nulle : c'est à dire au bout d'un temps $t_r = n/f_h$, $f_h$ étant la fréquence de l'horloge. Au bout de ce temps $t_r$, référencé par rapport au temps t0 où le signal B est passé au niveau bas (front descendant sur B), une impulsion positive apparaît sur la sortie Q du compteur.

Si le signal B est toujours à zéro, alors l'impulsion négative sur B est plus longue que la durée $t_r$ comptabilisée par le compteur : le front montant du signal RAZE commande une initialisation générale du circuit.

Si le signal B repasse à 1 avant que le registre R ne soit passé à zéro, ou juste au moment où le registre R passe à zéro, il n'y a pas d'initialisation générale, RAZE reste à zéro. Le compteur est ré-initialisé, comme on l'a vu précédemment, par le front montant de B.

Les équations suivantes définissent parfaitement le fonctionnement décrit ;

$$H = /(B \text{ ou } RAZG) \text{ et } CLOCK$$

$$C = (B \text{ ou } RAZG)$$

$$RAZE = /(B \text{ ou } RAZG) \text{ et } Q$$

Ce fonctionnement est par ailleurs illustré par le diagramme des temps présenté en figure 2, pour une coupure de durée d supérieure à une durée calibrée $d0 = n/f_h$.

Un tel dispositif d'initialisation conditionnelle selon ce premier mode de réalisation permet donc de provoquer l'initialisation du circuit dès que la coupure sur la ligne de télé-alimentation dure plus longtemps qu'une durée d0 déterminée, en utilisant un compteur et une horloge de fréquence $f_h$, ce compteur étant déclenché dès l'apparition de l'impulsion, et la durée d0 déterminée étant calculée par décomptage par rapport à une valeur n de chargement du compteur telle que $d0 = n/f_h$.

Cependant ce dispositif, qui a l'avantage d'être simple, ne permet de considérer qu'un gabarit simple d'impulsions.

Dans une application téléphonique, la condition peut-être un ensemble de gabarits tel que représenté en figure 5 : par rapport à un référentiel t0, toute impulsion de durée comprise dans l'intervalle (t1-t0;t2-t0) ou l'intervalle (t3-t0; t4-t0) peut-être autorisée. En dehors, de ces intervalles, il faut commander l'initialisation générale du circuit.

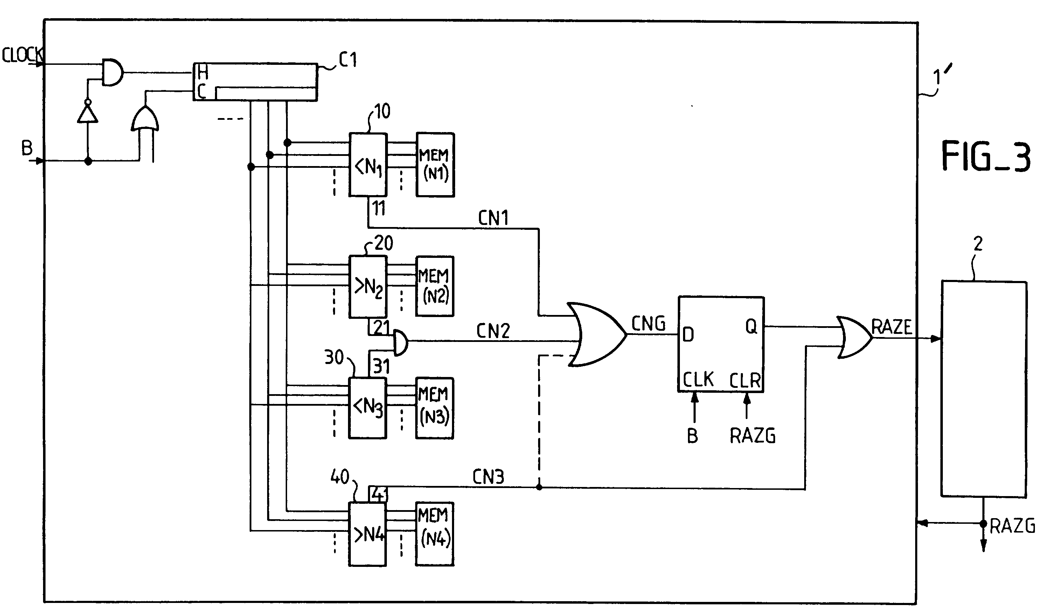

Un dispositif d'initialisation conditionnelle selon un second mode de réalisation, comme celui présenté en figure 3 autorise de telles conditions complexes.

Le dispositif 1' d'initialisation conditionnelle de la figure 3 comporte un compteur C1. La commande de remise à zéro du compteur est faite comme dans le précédent dispositif par les signaux B ou RAZG. En particulier, quand le compteur est remis à zéro, le registre de comptage est remis à zéro. Ce registre est celui incrémenté par l'horloge H du compteur. Son état est accessible sur des broches de sortie DO-D7 du compteur. La transmission de l'horloge CLOCK sur l'entrée horloge H du compteur est ici seulement contrôlée par le signal B. Si B vaut 1, il n'y a pas transmission; si B vaut O, il y a transmission. C'est une variante possible du montage vu dans le dispositif d'initialisation conditionnelle selon le premier mode de réalisation.

Les broches de sortie DO-D7 du compteur sont connectées à des entrées AO-A7 de comparateurs. Dans l'exemple, il y a 4 comparateurs 10, 20, 30 et 40. Chaque comparateur compare ces entrées AO-A7 à d'autres entrées BO-B7 connectées à un registre mémoire associé au comparateur :

MEM (N1) pour le comparateur 10
MEM (N2) pour le comparateur 20
MEN (N3) pour le comparateur 30
MEN (N4) pour le comparateur 40

Dans l'exemple, cette comparaison se fait en permanence, l'état du registre de comptage du compteur et le contenu des registres mémoires étant disponibles en permanence sur les entrées AO-A7 et BO-B7.

Les sorties 11, 21, 31 et 41 des comparateurs 10, 20, 30 et 40 servent alors à élaborer les différentes conditions de commande d'initialisation.

Dans l'exemple, on a choisi un gabarit complexe représenté en figure 5 et déjà décrit.

Par rapport au temps de référence t0, qui correspond au passage au niveau bas du signal B, si le front montant de l'impulsion sur B apparaît avant t1, ou entre t2 et t3 ou après t4, avec t1<t2<t3<t4, alors il doit y avoir initialisation.

Ainsi, dans l'exemple pris, 3 conditions CN1, CN2 et CN3 commandent l'initialisation générale.

Si p est le contenu du registre de comptage correspondant à la durée d de l'impulsion sur B, multipliée par la fréquence horloge $f_h$, $p=d.f_h$ et si on pose $Ni= (ti-t0) \times f_h$ pour i = 1 à 4, pour chacun des ti du gabarit complexe choisi (figure 5), alors :

CN1 correspond à p<N1,
CN2 correspond à p>N2 et p<N3
CN3 correspond à p>N4

Toutes les impulsions dont la remontée se produit entre t1 et t2 et entre t3 et t4 sont autorisées et ne provoquent pas d'initialisation. Les conditions CN1, CN2, CN3 sont élaborées à partir des sorties des comparateurs et au moyen de portes logiques ET, OU, d'inverseurs. Dans l'exemple, le comparateur 10 vérifie si p<N1, le comparateur 20 si p>N2, le comparateur 30 si p<N3, le comparateur 40 si p>N4. Par convention, si la comparaison effectuée par le comparateur est vraie, la sortie du comparateur s'établit à 1. Dans ces conditions, CN1 est obtenue en prenant la sortie 11 du comparateur 10; CN2 en faisant un ET logique entre les sorties 21 et 31 des comparateurs 20 et 30; CN3 en prenant la sortie 41 du comparateur 40.

Les conditions CN1, CN2 et CN3 sont donc vraies si elles sont au niveau haut. Il suffit alors de mettre ces trois conditions CN1, CN2 et CN3 en entrée d'un OU logique pour obtenir la condition générale CNG de commande d'initialisation.

Il reste que la comparaison qui nous intéresse est celle qui se produit au moment où l'impulsion sur le signal B est terminée, c'est à dire quand un front montant apparaît sur B. Or les comparateurs, dans l'exemple, comparent en permanence. La condition CNG n'est à prendre en compte que sur le front montant de B. Il suffit alors d'utiliser un élément de mémorisation qui mémorise la condition CNG sur ce front montant. Dans l'exemple, on utilise une bascule D, le signal CNG étant connecté sur la broche D et le signal B sur la broche CLK de cette bascule. Quand un front montant apparaît sur B, alors le signal CNG sera transmis sur la sortie Q. C'est cette sortie Q qui commande alors l'initialisation.

Une amélioration simple permet, pour la comparaison à la durée la plus longue (condition p>N4), de ne pas attendre la fin de l'impulsion sur B : il suffit de prendre la sortie CN3 dans l'exemple et de la combiner avec la sortie Q de la bascule en un OU logique.

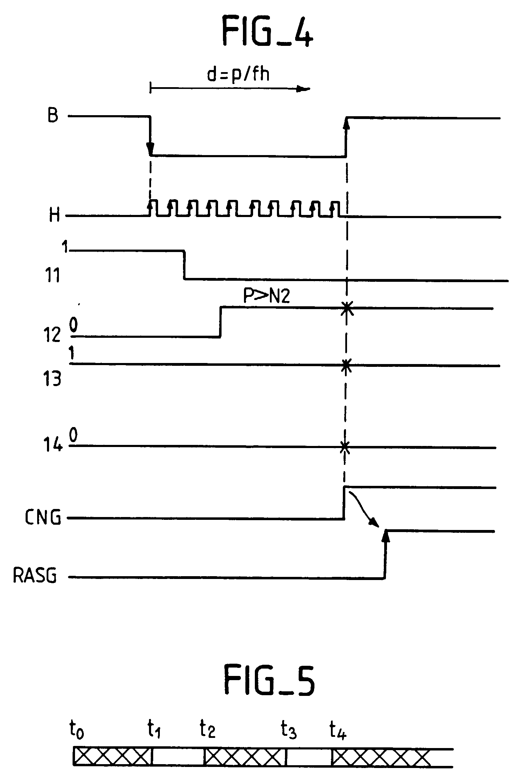

La sortie RAZE de la porte OU est connectée en entrée du circuit 2 de gestion de l'initialisation qui commande l'initialisation générale RAZG. Quand RAZG est activé, il remettra aussi à zéro la bascule D. Un diagramme des temps correspondant à ce dispositif 1' est présenté en figure 4, dans le cas où p>N2 et p<N3.

Ce dispositif 1' comporte autant de comparateurs nécessaires pour réaliser la condition générale d'initialisation correspondant au gabarit déterminé. Il n'y a pas de limite.

Il est tout à fait possible de ne déclencher la comparaison que sur le front montant de B. Mais le temps de comparaison sera plus long que dans l'exemple décrit de comparateurs "suiveurs", qui comparent en permanence.

Dans tous les cas, ce dispositif numérique est aisément réalisable par un microprocesseur. En particulier il est aisément intégrable dans un microprocesseur dédié à l'application téléphonique.

Certaines fonctions du dispositif peuvent être réalisées par des microprogrammes, comme les comparaisons et l'élaboration de la condition générale dans le cas du dispositif selon le second mode de réalisation (figure 3).

Toutes ces variantes restent dans le cadre de l'invention. Dans le cas de l'application téléphonique, le dispositif d'initialisation conditionnelle étant intégré ou réalisé par le microprocesseur, il n'y a plus de circuit analogique s'interposant entre le bipolaire et ce microprocesseur. Il n'y a plus de réglages de composants (résistances, capacités) et l'utilisation d'un tel dispositif est plus souple du fait de son caractère programmable (valeur de chargement du compteur, valeurs et sens de comparaisons des comparateurs).

## Revendications

1. Dispositif d'initialisation conditionnelle d'un circuit télé-alimenté par une ligne de transmission d'impulsions obtenues par des court-circuits de la ligne de transmission pendant des durées calibrées, un court-circuit de la ligne des transmissions correspondant à une coupure d'alimentation du circuit télé-alimenté, une alimentation du circuit télé-alimenté étant maintenue au moyen d'une capacité pendant un court-circuit, dispositif caractérisé en ce qu'il comporte un compteur pour mesurer une durée (d) d'un court-circuit et des moyens pour comparer la durée (d) d'un court-circuit à au moins une durée calibrée (do), pour commander une initialisation du circuit télé-alimenté si la durée (d) d'un court-circuit est inférieure ou supérieure à la durée calibrée (do).

2. Dispositif d'initialisation conditionnelle selon la revendication 1, caractérisé en ce que les moyens pour comparer comportent des comparateurs, chaque comparateur comparant la durée d'un court-circuit à une durée calibrée.

3. Dispositif d'initialisation conditionnelle selon la revendication 1 pour une première durée calibrée (do), caractérisé en ce que le compteur décompte à une fréquence ($f_h$) d'une horloge et qu'à une initialisation du circuit télé-alimenté ou au début d'un court-circuit de la ligne de transmission, il est initialisé à une valeur (n) égale à la première durée calibrée (d0), multipliée par la fréquence de décomptage, le compteur commençant à décompter à la dite fréquence ($f_h$) au début d'un court-circuit sur la ligne de transmission et arrêtant de décompter à la fin du court-circuit, ou à l'initialisation du circuit télé-alimenté, un passage à zéro du compteur provoquant l'initialisation du circuit télé-alimenté.

4. Dispositif d'initialisation conditionnelle selon la revendication 2 pour plusieurs durées calibrées comportant un comparateur par durée calibrée différente, caractérisé en ce que le compteur compte à une fréquence ($f_h$) d'une horloge et qu'il est remis à zéro à une initialisation du circuit télé-alimenté ou au début d'un court-circuit de la ligne de transmission, le compteur commençant à compter à la dite fréquence ($f_h$) au début d'un court-circuit de la ligne de transmission et arrêtant de compter à la fin de ce court-circuit ou à une initialisation du circuit télé-alimenté, chaque comparateur recevant en entrée une sortie du compteur pour la comparer à une durée calibrée, les sorties des comparateurs étant combinées entre elles par des portes logiques de manière à élaborer une condition d'initialisation générale (CNG) du circuit télé-alimenté.

5. Dispositif d'initialisation conditionnelle selon la revendication 4, caractérisé en ce que la condition d'initialisation générale du circuit télé-alimenté n'est prise en compte, pour initialiser le circuit télé-alimenté, que lorsque le court-circuit prend fin.

6. Dispositif d'initialisation conditionnelle selon la revendication 5, caractérisé en ce qu'une initialisation du circuit télé-alimenté est commandée lorsque la condition d'initialisation générale du circuit télé-alimenté est remplie et que le court-circuit a pris fin ou quand la durée du court-circuit est devenue supérieure à une durée calibrée la plus longue.

7. Dispositif d'initialisation conditionnelle selon l'une quelconque des revendications précédentes, caractérisé en ce qu'il est intégré dans un microprocesseur.

## Patentansprüche

1. Vorrichtung zum bedingten Initialisieren einer fernversorgten Schaltung durch eine Leitung zur Übertragung von Impulsen, die durch Kurzschlüsse der Übertragungsleitung während kalibrierter Dauern erhalten werden, wobei ein Kurzschluß der Übertragungsleitung einer Unterbrechung der Versorgung der fernversorgten Schaltung entspricht und eine Versorgung der fernversorgten Schaltung während eines Kurzschlusses mittels einer Kapazität aufrechterhalten wird, und die Vorrichtung dadurch gekennzeichnet ist, daß sie einen Zähler aufweist zum Messen einer Dauer (d) eines Kurzschlusses, und Mittel zum Vergleichen der Dauer (d) eines Kurzschlusses mit zumindest einer kalibrierten Dauer (do), um eine Initialisierung der fernversorgten Schaltung auszulösen, wenn die Dauer (d) eines Kurzschlusses kleiner oder größer als die kalibrierte Dauer (do) ist.

2. Vorrichtung zum bedingten Initialisieren nach Anspruch 1, dadurch gekennzeichnet, daß die Mittel zum Vergleichen Vergleicher umfassen, wobei jeder Vergleicher die Dauer eines Kurzschlusses mit einer kalibrierten Dauer vergleicht.

3. Vorrichtung zum bedingten Initialisieren nach Anspruch 1 für eine erste kalibrierte Dauer (do), dadurch gekennzeichnet, daß der Zähler mit einer Frequenz ($f_h$) eines Taktgebers abwärts zählt und bei einer Initialisierung der fernversorgten Schaltung oder zu Beginn eines Kurzschlusses der Übertragungsleitung auf einen Wert (n), der gleich der ersten kalibrierten Dauer (do) multipliziert mit der Abwärtszählfrequenz ist, initialisiert wird, wobei der Zähler zu Beginn eines Kurzschlusses auf der Übertragungsleitung mit der genannten Frequenz ($f_h$) abwärts zu zählen beginnt und am Ende des Kurzschlusses oder mit der Initialisierung der fernversorgten Schaltung abwärts zu zählen aufhört, und wobei ein Nulldurchgang des Zählers die Initialisierung der Schaltung herbeiführt.

4. Vorrichtung zum bedingten Initialisieren nach Anspruch 2 für mehrere kalibrierte Dauern (do), umfassend einen Vergleicher pro unterschiedlicher kalibrierter Dauer, dadurch gekennzeichnet, daß der Zähler mit einer Frequenz ($f_h$) eines Taktgebers zählt und bei einer Initialisierung der fernversorgten Schaltung oder zu Beginn eines Kurzschlusses der Übertragungsleitung auf Null zurückgesetzt wird, wobei der Zähler zu Beginn eines Kurzschlusses auf der Übertragungsleitung mit der genannten Frequenz ($f_h$) zu zählen beginnt und am Ende dieses Kurzschlusses oder mit der Initialisierung der fernversorgten Schaltung zu zählen aufhört, wobei jeder Vergleicher am Eingang ein Ausgangssignal des Zählers empfängt, um dieses mit einer kalibrierten Dauer zu vergleichen, und wobei die Ausgangssignale der Vergleicher durch Logiktore miteinander kombiniert werden, um eine Bedingung für eine generelle Initialisierung (CNG) der fernversorgten Schaltung zu schaffen.

5. Vorrichtung zum bedingten Initialisieren nach Anspruch 4, dadurch gekennzeichnet, daß die Bedingung für generelle Initialisierung der fernversorgten Schaltung nur dann zum Initialisieren der fernversorgten Schaltung berücksichtigt wird, wenn der Kurzschluß endet.

6. Vorrichtung zum bedingten Initialisieren nach Anspruch 5, dadurch gekennzeichnet, daß eine Initialisierung der fernversorgten Schaltung ausgelöst wird, wenn die Bedingung zur generellen Initialisierung der fernversorgten Schaltung erfüllt ist und der Kurzschluß geendet hat, oder wenn die Dauer des Kurzschlusses größer als die längste der kalibrierten Dauern geworden ist.

7. Vorrichtung zum bedingten Initialisieren nach einem der vorangehenden Ansprüche, dadurch gekennzeichnet, daß sie in einen Mikroprozessor integriert ist.

**Claims**

1. Device for the conditional initialisation of a circuit powered remotely by a line which transmits pulses obtained by short-circuits in the transmission line for calibrated durations, a short-circuit in the transmission line corresponding to an interruption in the supply of the remotely powered circuit, a supply to the remotely powered circuit being maintained by means of a capacitor during a short-circuit, a device characterised in that it has a counter for measuring a duration (d) of a short-circuit and means for comparing the duration (d) of a short-circuit with at least one calibrated duration (do) in order to control an initialisation of the remotely powered circuit if the duration (d) of a short-circuit is shorter or longer than the calibrated duration (do).

2. Conditional initialisation device according to Claim 1, characterised in that the means for comparing include comparators, each comparator comparing the duration of short-circuit with a calibrated duration.

3. Conditional initialisation device according to Claim 1 for a first calibrated duration (do), characterised in that the counter counts down at a clock frequency ($f_h$) and that, when the remotely powered circuit is initialised or at the start of a short-circuit in the transmission line, it is initialised at a value (n) equal to the first calibrated duration (d0) multiplied by the counting-down frequency, the counter starting to count down at the said frequency ($f_h$) at the start of a short-circuit on the transmission line and ceasing to count down at the end of the short-circuit, or when the remotely powered circuit is initialised, the initialisation of the remotely powered circuit being triggered by the counter moving to zero.

4. Conditional initialisation device according to Claim 2 for several calibrated durations, including one comparator for each different calibrated duration, characterised in that the counter counts at a clock frequency ($f_h$) and that it is reset to zero when the remotely powered circuit is initialised or at the start of a short-circuit in the transmission line, the counter starting to count at the said frequency ($f_h$) at the start of a short-circuit in the transmission line and ceasing to count at the end of this short-circuit or when the remotely powered circuit is initialised, each comparator receiving as input an output of the counter in order to compare this output with a calibrated duration, the outputs of the comparators being combined with each other by logic gates in order to produce a general initialisation condition (CNG) of the remotely powered circuit.

5. Conditional initialisation device according to Claim 4, characterised in that the general initialisation condition of the remotely powered circuit is taken into account, in order to initialise the remotely powered circuit, only when the short-circuit has ended.

6. Conditional initialisation device according to Claim 5, characterised in that an initialisation of the remotely powered circuit is demanded when the general initialisation condition of the remotely powered circuit is fulfilled and the short-circuit has ended or when the duration of the short-circuit has become longer than the longest calibrated duration.

7. Conditional initialisation device according to any one of the preceding claims, characterised in that it is integrated in a microprocessor.

EP 0 463 917 B1

FIG_1

MEM

D0  D7

CLOCK

ET,

/G

H   R   Q

C

CO

ET´

Q
/G

RAZE

B

RAZG

G

OU

RAZG

1

2

FIG_2

B

d

d0

H

Q

RAZG

FIG_3

EP 0 463 917 B1

# FIG_4

$d = p/fh$

B

H

1
11

P>N2

12 0

1
13

14 0

CNG

RASG

# FIG_5

$t_0$     $t_1$    $t_2$      $t_3$   $t_4$